(19) **Europäisches Patentamt / European Patent Office / Office européen des brevets**

(11) **EP 2 569 123 B1**

(12) # EUROPÄISCHE PATENTSCHRIFT

(45) Veröffentlichungstag und Bekanntmachung des Hinweises auf die Patenterteilung:
**07.12.2016 Patentblatt 2016/49**

(21) Anmeldenummer: **11726186.7**

(22) Anmeldetag: **10.05.2011**

(51) Int Cl.:
**B23K 26/04** *(2006.01)* **B23K 26/08** *(2006.01)*
**B23K 26/03** *(2006.01)* **G01B 11/14** *(2006.01)*
**G01B 9/02** *(2006.01)*

(86) Internationale Anmeldenummer:
**PCT/IB2011/052048**

(87) Internationale Veröffentlichungsnummer:
**WO 2011/141867 (17.11.2011 Gazette 2011/46)**

(54) **MATERIALBEARBEITUNGSVORRICHTUNG MIT IN-SITU MESSEN DES BEARBEITUNGSABSTANDS**

MATERIAL-WORKING DEVICE WITH IN-SITU MEASUREMENT OF THE WORKING DISTANCE

DISPOSITIF D'USINAGE DE MATÉRIAU AVEC MESURE IN SITU DE LA DISTANCE D'USINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2010 DE 102010016862**

(43) Veröffentlichungstag der Anmeldung:
**20.03.2013 Patentblatt 2013/12**

(73) Patentinhaber: **Precitec Optronik GmbH
63263 Neu-Isenburg (DE)**

(72) Erfinder:
• **SCHÖNLEBER, Martin
63743 Aschaffenburg (DE)**

• **KOGEL-HOLLACHER, Markus
63808 Halbach (DE)**

(74) Vertreter: **Schweiger, Martin et al
Schweiger & Partners
Intellectual Property Law Firm
Elsenheimer Strasse 1
80687 München (DE)**

(56) Entgegenhaltungen:
**EP-A1- 1 977 850      DE-A1-102008 049 821
US-A1- 2009 273 782**

**Beschreibung**

Die Erfindung betrifft eine Materialbearbeitungsvorrichtung mit Bearbeitungsstrahlen eines Strahlerzeugers und mit in-situ Messen des Bearbeitungsabstands zwischen dem Strahlerzeuger und dem Werkstück. Die Materialbearbeitungsvorrichtung weist dazu einen Bearbeitungslaser mit Bearbeitungsstrahlen im nahen Infrarot auf. Ein Laserscanner mit zweidimensionaler Ablenkeinrichtung mit Scannerspiegeln ist strahlabwärts eines Bearbeitungslaser angeordnet. Eine automatische Fokusnachstelleinrichtung für variierende Bearbeitungsabstände ist vorgesehen.

Eine derartige Materialbearbeitungsvorrichtung ist aus der Druckschrift EP 1 977 850 A1 bekannt. Figur 8 zeigt eine teilweise perspektivische Prinzipskizze einer derartigen Materialbearbeitungsvorrichtung 3 gemäß dem Stand dem Technik. Diese Materialbearbeitungsvorrichtung 3 bearbeitet mit Bearbeitungsstrahlen 4 eines Strahlerzeugers 5 und mit in-situ Messen des Bearbeitungsabstands a zwischen einem Bearbeitungskopf 7 und dem Werkstück 6 das perspektivisch dargestellte leicht gewölbte Werkstück 6. Die Materialbearbeitungsvorrichtung 3 weist dazu als Strahlerzeugers 5 einen Bearbeitungslaser mit Bearbeitungsstrahlen 4 im nahen Infrarot auf. Der Bearbeitungskopf 7 wird von einem Industrieroboter 8 geführt. In der Materialbearbeitungsvorrichtung 3 ist eine automatische Fokusnachstelleinrichtung für zeitlich variierende Bearbeitungsabstände a(t) vorgesehen, um beispielsweise der Wölbung 9 des Werkstücks 6 beim führen des Werkstücks 6 in Pfeilrichtung A zu folgen. Dazu ist in dem Bearbeitungskopf 7 ein optischer Kohärenztomograph 10 zur Tomographieerfassung vorgesehen.

Ein Nachteil dieser Materialbearbeitungsvorrichtung 3 ist, dass die Messsignale für die Tomographieerfassung über Lichtleitfasern transportiert werden. Bei Vibrationen im Betrieb kann durch Schwingungen an Lichtleitfasern die spektrale Transmission und damit der Polarisationszustand und das Mischungsverhältnis zwischen einzelnen Polarisationsmoden verändert sein, was das Messergebnis und damit die Tomographieerfassung beeinträchtigt.

Aufgabe der Erfindung ist es, die Nachteile im Stand der Technik zu überwinden und vor, während sowie nach der Bearbeitung (Ablatieren, Auftragschweißen, usw.) einer Oberfläche durch einen Laser, die Topographie berührungslos zu erfassen. Ziel ist es dabei die Zuverlässigkeit der Regelung des Bearbeitungsprozesses und die Endpunktbestimmung des Materialab-/auftrags mit Hilfe einer Abstandsmessung zu verbessern. Eine weitere Aufgabe ist es, den Abstand des Werkstücks zum Bearbeitungssystem absolut zu messen z.B. um den Fokus des Lasers nachzustellen.

Diese Aufgabe wird mit dem Gegenstand des unabhängigen Anspruchs 1 gelöst. Vorteilhafte Weiterbildungen der Erfindung ergeben sich aus den abhängigen Ansprüchen. Erfindungsgemäß wird eine Materialbearbeitungsvorrichtung mit Bearbeitungsstrahlen eines Strahlerzeugers und mit in-situ Messen des Bearbeitungsabstands zwischen dem Strahlerzeuger und dem Werkstück geschaffen. Die Materialbearbeitungsvorrichtung weist dazu einen Bearbeitungslaser mit Bearbeitungsstrahlen auf. Ein Laserscanner mit zweidimensionaler Ablenkeinrichtung mit Scannerspiegeln ist strahlabwärts eines Bearbeitungslaser angeordnet. Eine automatische Fokusnachstelleinrichtung für variierende Bearbeitungsabstände ist vorgesehen. Eine Sensorvorrichtung mit einem Spektrometer und mindestens zwei Sensorlichtquellen erzeugt Messstrahlen, die über den Laserscanner und ein Objektiv gemeinsam den Bearbeitungsbereich des Werkstücks unter Erfassung des Werkstückabstands abtasten. Die Messstrahlen von mindestens zwei der Sensorlichtquellen sind linearpolarisiert und mit gekreuzten Polarisationsrichtungen in den Strahlengang des Laserscanners der Materialbearbeitungsvorrichtung über ein optisches Koppelelement kollimiert eingekoppelt.

Diese Materialbearbeitungsvorrichtung hat den Vorteil, dass für die Sensoroptik eine vorgegebene Laserscanneroptik eines Bearbeitungslasers verwendet wird, so dass Bearbeitungsstrahl und Sensormessstrahlen über ein F-theta-Linsensystem auf das Werkstück gemeinsam gerichtet sind. Als Bearbeitungslaser ist typischerweise ein Festkörperlaser mit einer Wellenlänge im Bereich zwischen 1030 nm und 1070 nm vorgesehen. Ein weiterer Vorteil ist, das mindestens zwei Sensorlichtquellen die Messstrahlen erzeugen, die linearpolarisiert sind und mit gekreuzten Polarisationsrichtungen in den Strahlengang des Laserscanners der Materialbearbeitungsvorrichtung über ein optisches Koppelelement kollimiert eingekoppelt werden, so dass die Sensorvorrichtung robuster vor Vibrationen der Materialbearbeitungsvorrichtung geschützt ist, zumal durch die gekreuzten Polarisationsrichtungen Erschütterungen oder Vibrationen der eingesetzten Lichtleitfasern die Beleuchtungs- und Detektionseigenschaften nicht mehr beeinträchtigen.

Dazu wird in der Materialbearbeitungsvorrichtung ein spektralinterferometrischer Abstandssensor (auch OCT genannt, optical coherence tomography) in den Laserscanner für die Materialbearbeitung integriert. Erfindungsgemäß wird zur Lösung der Aufgabe somit eine Kombination von Merkmalen vorgeschlagen, die eine hochwertige Abstandsmessung im gesamten Volumen des Laserscanners ermöglicht. Dazu werden vor allem Maßnahmen zur spektralen Stabilisierung vorgesehen.

Durch die Verwendung von unpolarisierten Lichtquelle wie vorzugsweise von zwei Lichtquellen mit linear polarisierter Abstrahlung, die mit einer polarisationserhaltenden Faser zu einem PBC (polarisation beam combiner) transportiert werden und im PBC mit gekreuzten Polarisationsrichtungen durch einen polarisierenden Strahlteiler zusammengeführt werden, wird verhindert, dass durch Wackeln an den Lichtleitfasern der Polarisationszustand und damit das Mischungsverhältnis zwischen den Polarisationsmoden verändert wird. Die spektrale Transmission wird demnach nicht mehr beeinträchtigt selbst wenn optische Komponenten eine je nach Polarisationsrichtung unterschiedliche spektrale Transmission aufweisen.

Wenn jedoch in den beiden Polarisationsmoden beispielsweise durch Spannungsdoppelbrechung oder durch Beschichtung unterschiedliche Wegunterschiede vorliegen, spaltet sich im ungünstigsten Fall der auszuwertende Abstandspeak in zwei Teilpeaks. In dem Fall wird in einer weiteren Ausführungsform der Erfindung ein doppelbrechendes Element in den Strahlengang eingefügt, dessen Hauptrichtungen mit den Hauptrichtungen der polarisationsrelevanten Komponenten, wie Strahlteiler und/oder Galvanospiegel übereinstimmen. Dadurch werden die beiden Peaks so weit getrennt, dass eine saubere Auswertung möglich ist.

Als Lichtquellen werden Superlumineszens-Dioden mit linear polarisierter Abstrahlung eingesetzt, wobei die Lichtquellen über polarisationserhaltende Lichtleitfasern mit einem Polarisationsstrahlenkoppler verbunden sind, der durch einen polarisierenden Strahlteiler die gekreuzten Polarisationsrichtungen zusammenführt. Zum kollimierten Einkoppeln der Sensorstrahlen in den Bearbeitungsstrahlengang, weist der Sensorstrahlengang einen schmalbandigen dichroischen Strahlteiler wie ein schmalbandiges Notch-Filter auf.

Anstelle eines schmalbandigen dichroischen Strahlteilers kann zum kollimierten Einkoppeln der Sensorstrahlen in den Bearbeitungsstrahlengang, auch ein rotierendes Filterrad vorgesehen sein, das abwechselnd Laserlicht oder Sensorlicht in den Laserscanner einkoppelt und synchron zur Pulsfrequenz des Bearbeitungslasers rotiert, so dass in vorteilhafter Weise in den Pulspausen des Bearbeitungslasers der Laserscanner für den Messstrahl zur Verfügung steht und der Bearbeitungsvorgang nicht beeinträchtigt wird. Mit einem in den Strahlengang einschwenkbarer Umlenkspiegel, kann in einer weiteren Ausführungsform der Erfindung ebenfalls ein kollimiertes Einkoppeln der Sensorstrahlen in den Bearbeitungsstrahlengang erreicht werden.

Eine Nachfokussierung des Sensorlichts erfolgt vorzugsweise durch Mitverwendung der Fokusnachführung des Lasers. Das Sensorlicht ist dabei nahezu kollimiert in den Laserstrahlengang eingekoppelt. Um jedoch die chromatische Fokusverschiebung des F-theta-Objektivs zu kompensieren, wird die Linse des Sensorkollimators nachfokussiert.

Trotz variierender Verkippung der dielektrisch beschichteten Scannerspiegel kann eine Stabilisierung einer spektralen Reflektivität dadurch erreicht werden, dass die Sensorwellenlänge mit 1260 bis 1360 nm (Nanometer) nahe bei der oben erwähnten Laserwellenlänge zwischen 1030 nm und 1070 nm vorgesehen ist. Eine gleichmäßig hohe, verkippungs- und polarisationsunabhängige Reflektivität der Scannerspiegel wird somit auch für das Sensorlicht genutzt.

Außerdem ist es möglich, die Sensorwellenlänge in den Wellenlängenbereich des "Kamerafensters" der Scannerspiegel bei ca. 650 nm zu legen. Hier sind die Reflektivitäten der Scannerspiegel bzw. Galvanospiegel ebenfalls hoch und gleichmäßig. Für einen derartigen Wellenlängenbereich stehen kommerzielle Strahlteiler zur Sensorstrahleinkopplung zur Verfügung. Das vereinfacht in vorteilhafter Weise eine Nachrüstung einer bestehenden Materialbearbeitungsvorrichtung mit der neuen Sensorvorrichtung zu einer erfindungsgemäßen Materialbearbeitungsvorrichtung.

In einer weiteren Ausführungsform der Erfindung ist es vorgesehen, dass die Materialbearbeitungsvorrichtung ein rechnergestütztes Steuergerät aufweist, das für Scannerspiegel mit Beschichtungen, die eine unterschiedliche Reflektivität bei der Sensorwellenlänge und bei der Laserwellenlänge aufweisen, mit einer Tiefpasscharakteristik ausgestattet ist, die eine Sensorlichtwellenlänge, die größer als die Laserlichtwellenlänge ist aus dem reflektierten Signal herausfiltert und zur Abstandserfassung auswertet.

Alternativ zur Tiefpassfilterung kann eine spektrale Einhüllende $I_{0-mean}(k)$ auch in einer Kalibrierfahrt für jede Kombination der Orientierung der Galvanospiegel gemessen werden. Hierbei wird eine Planfläche mit bekannter spektraler Reflektivität vermessen. Dazu weist die Materialbearbeitungsvorrichtung ein rechnergestütztes Steuergerät auf, das bei Scannerspiegeln mit Beschichtungen, die eine unterschiedliche Reflektivität bei der Sensorwellenlänge und bei der Laserwellenlänge aufweisen, Kalibrierfahrten veranlasst, Mit den Kalibrierfahrten kann jede Kombination der Orientierung der galvanisch beschichteten Scannerspiegel im Vergleich zu einer Planfläche mit bekannter spektraler Reflektivität vermessen und im Rechner tabelliert gespeichert und wobei die gespeicherte Tabelle bei der Auswertung des reflektierten Messsignals berücksichtigt werden.

Diese Lösung ist nur brauchbar, wenn die Welligkeit des reflektierten Messsignals nicht allzu groß ausfällt. Im wesentlichen geht es darum, dass es nicht möglich ist, den Term $\exp[i*\Phi(\lambda)]$ zu separieren. Es können nur $|E_1|$ und $|E_2|$ bestimmt und eliminiert werden. Dabei muss vorausgesetzt werden, dass $\Phi(\lambda)$ im gesamten Wellenlängenbereich im Intervall $\pm n/2$ liegt. Außerdem ist es denkbar, dass der Mischterm einen Knoten, wo $|E_R|*|E_R| = 0$ ist, hat und wo die Phase der Trägerfrequenz umklappt, d.h. um n springt. Dies kann abgefangen werden, indem bei der Division durch $|E_R|*|E_R|$ am Knoten ein Vorzeichenwechsel von $|E_R|*|E_R|$ angesetzt wird.

Damit ergibt sich folgendes:

Im allgemeinen Fall ist

$$E_0 = E_1(\lambda) * \exp[i*\Phi(\lambda)]$$

mit reellem $E_1$ und damit

$$I = |E_R|^2 + |E_1|^2 + 2|E_R|*|E_1|\{\cos \Phi(\lambda) * \cos[4\pi(z_0 - z_R)/\lambda] -$$

$$\sin \Phi(\lambda)* \sin[4\pi(z_0 - z_R)/\lambda]\}$$

$$= |E_R|^2 + |E_1|^2 + 2|E_R|*|E_R| * \cos[4\pi(z_0 - z_R)\lambda + \Phi(\lambda)]$$

Bevorzugt messbar sind sind folgende Spektren:

$$I_{Referenz} = E_R^2 \qquad\qquad (\text{Objektarm abgeblendet})$$

$I_{Objekt} = E_1^2$    (Referenzarm abgeblendet)

Sind diese bekannt, ist es möglich, aus dem ebenfalls gemessenen I den Cosinus-Term zu separieren.

Das Problem ist nun, dass die Phasenstörung nicht ohne weiteres von der Abstandsphase

$$\Phi_0(\lambda) = 4\pi(z_0 - z_R)/\lambda$$

Separiert werden kann, da sie in $I(\lambda)$ nur als Summe auftreten. Daher wird nun $|E_R|$ und $|E_1|$ ermittelt. Dann wird der Mischterm

$$2|E_R|*|E_R| * \cos[4\pi(z_0 - z_R)\lambda + \Phi(\lambda)]$$

durch $|E_R|*|E_R|$ dividiert.

Die Elimination der Reflektionsamplituden erfolgt durch Vergleich der gefilterten fouriertransformierten Fourierspektren. Es wird daraus die spektrale Modulation ermittelt. Durch diese wird das trägerfrequenzgefilterte Spektrum dividiert, was eine Gewichtungsoperation bildet.

Genauso funktioniert eine Mess-Serie mit drei eng benachbarten Abständen des Werkstücks (bzw. eines Planspiegels) oder des Referenzspiegels mit:

$$I(z_0 - \Delta z), \quad I(z_0) \quad \text{und} \quad I(z_0 + \Delta z)$$

Durch Differenzbildung erhält man

$$I(z_0) - I(z_0 + \Delta z) = 2E_R*E_1*$$

$$\{[1-\cos(4\pi\Delta z/\lambda)]*\cos[4\pi(z_0 - z_R)/\lambda + \Phi(\lambda)] + \sin(4\pi\Delta z/\lambda) *$$

$$\sin[4\pi (z_0 - z_R)/\lambda + \Phi(\lambda)]\}$$

$$I(z_0) - I(z_0 - \Delta z) = 2E_R*E_1*$$

$$\{[1-\cos(4\pi\Delta z/\lambda)]*\cos[4\pi(z_0 - z_R)/\lambda + \Phi(\lambda)] + \sin(4\pi\Delta z/\lambda) *$$

$$\sin[4\pi (z_0 - z_R)/\lambda + \Phi(\lambda)]\}$$

und schließlich

$$I(z_0) - I(z_0 + \Delta z) - [I(z_0) - I(z_0 - \Delta z)]$$
$$= I(z_0 - \Delta z) - I(z_0 + \Delta z) = 4 E_R * E_1 * \sin(4\pi\Delta z/\lambda)*$$
$$\sin[4\pi(z_0 - z_R)/\lambda + \Phi(\lambda)]$$

und

$$I(z_0 - \Delta z) + I(z_0 + \Delta z)$$
$$= 4E_R*E_1 *[1-\cos(4\pi\Delta z/\lambda)]*\cos[4\pi(z_0 - z_R)/\lambda + \Phi(\lambda)]$$

Damit sind Cosinus und Sinus bekannt. Das gesuchte $\Phi(\lambda)$ kann somit absepariert werden.

Man kann $\Phi(\lambda)$ auch mit einer Fouriermethode ermitteln. Hierzu wird die komplexe Fouriertransformierte bzw. FFT des entzerrten Spektrums für negative Schichtdicken und für kleine Schichtdicken auf Null gesetzt und invers fouriertransformiert. Es wird vorausgesetzt, dass der Fourierpeak zur Distanzmessung außerhalb der genullten Region liegt. Als Ergebnis erhält man:

$$I_1 = E_R*E_1(\lambda) * \exp[i*\Phi(\lambda)] * \exp[i4\pi(z_0 - z_R)/\lambda].$$

Eine Betragsbildung liefert somit:

$$I_2 = |I_1| = E_R*E_1(\lambda)$$

In der nächsten invers-FFT werden nur Schichtdicken mit kleinen Beträgen stehen gelassen. Das liefert

$$I_3 = E_R^2 + E_1(\lambda)^2$$

so dass

$$0 = E_R^4 - I_3 E_R^2 + I_2^2 \text{ ist.}$$

Das Ergebnis besteht darin, dass die Werte $E_R$, $E_1(\lambda)$ und $\Phi(\lambda)$ aus einem einzigen Spektrum - und zwar dem abstandsmessenden Spektrum - herauspräpariert werden können.

Im letzten Schritt wird schließlich:

$I_1$ mit $1/(E_R*E_1(\lambda)$ multipliziert und fouriertransformiert.

Dabei wird vorrausgesetzt, dass $\Phi(\lambda)$ eine einigermaßen glatte Funktion ist.

In einer weiteren Ausführungsform der Erfindung weist die Sensorvorrichtung einen Freistrahl-Vormodulierer auf, der sowohl mit den Sensorlichtquellen als auch mit dem Sensorstrahlengang durch eine Lichtleitfaser verbunden ist. Dazu ist der Freistrahl-Vormodulierer als Interferometer mit zwei Armen ausgeführt und das Faserende des Freistrahl-Vormodulierers ist zum Sensorstrahlengang hin teilreflektierend ausgeführt. Durch den Freistrahl-Vormodulierer wird eine erste Teilwelle mit einer zweiten Teilwelle zur Interferenz gebracht. Die erste Teilwelle wird in dem längeren Referenzarm des Freistrahl-Vormodulierers und am Faserende, während die zweite Teilwelle in dem kürzeren Objektarm des Freistrahl-Vormodulierers und an dem Werkstück reflektiert wird. Dabei liegen in vorteilhafter Weise andere spektrale Modulationen außerhalb des Messbereichs einer Auswerteeinheit. Um die Gesamtdispersion im Sensorstrahlengang zu kompensieren, ist in dem Freistrahl- Vormodulierer eine Glasoptik mit einer gleichen Dispersion wie die Gesamtdispersion im Sensorstrahlengang vorgesehen.

Anstelle eines Freistrahl-Vormodulierers sieht eine weitere Ausführungsform der Erfindung ein Interferometer vor. Das Interferometer ist in dem kollimierten Sensorstrahl vor einer Einkopplung des Bearbeitungslaserstrahls angeordnet. Dabei wirkt ein Referenzarm des Interferometers dispersionskompensierend. Der Referenzarm weist dazu die gleiche optische Länge wie der Objektarm zwischen einem Interferometerstrahlteiler und dem Werkstück auf.

Darüber hinaus ist in einer weiteren Ausführungsform der Erfindung ein weiterer Sensorkopf außerhalb der Bearbeitungszone vorgesehen, der einen Referenzabstand zum Werkstück erfasst und eine absolute Änderung einer Bearbeitungstiefe bei Laserablation oder einer Bearbeitunghöhe bei einem Materialauftrag ermittelt.

Die Erfindung wird nun an Hand der beigefügten Figuren nähererläutert.

Figur 1 zeigt eine schematische Skizze einer Materialbeabeitungsvorrichtung gemäß einer ersten Ausführungsform der Erfindung;

Figur 2 zeigt eine schematische Skizze einer Materialbeabeitungsvorrichtung gemäß einer zweiten Ausführungsform der Erfindung;

Figur 3 zeigt mit Figur 3a ein Rohspektum und mit Figur 3b ein nivelliertes Spektrum nach erfindungsgemäßer Bearbeitung;

Figur 4 zeigt zwei gemessene Reflexionsspektren eines Planspiegels eines Laserscanners;

Figur 5 zeigt die Polarisations- und winkelabhängige Transmission von Scannerspiegeln;

Figur 6 zeigt den Brechungsindex von Quarzglas in der Umgebung der Laserwellenlängen um 1050 nm;

Figur 7 zeigt ein Diagramm für Gaußstrahlparameter in Bezug auf Taillendurchmesser und Rayleighlänge;

Figur 8 zeigt eine telweise perspektivische Prinzipskizze einer Materialbearbeitungsvorrichtung gemäß dem Stand dem Technik.

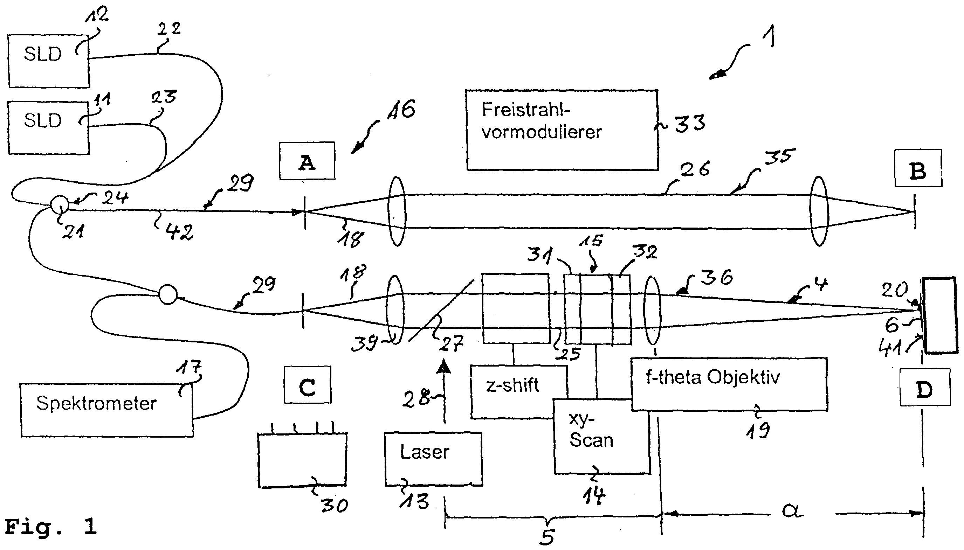

Figur 1 zeigt eine schematische Skizze einer Materialbeabeitungsvorrichtung 1 gemäß einer ersten Ausführungsform der Erfindung. Die Materialbearbeitungsvorrichtung 1 arbeitet mit Bearbeitungsstrahlen 4 eines Strahlerzeugers 5 und mit in-situ Messen des Bearbeitungsabstands (a) zwischen dem Strahlerzeuger 5 und einem Werkstück 6. Die Materialbearbeitungsvorrichtung 1 weist dazu des Bearbeitungslaser 13 mit Bearbeitungsstrahlen 4 im nahen Infrarot auf. Ein Laserscanner 14 mit zweidimensionaler Ablenkeinrichtung 15 mit Scannerspiegeln 31 und 32 ist strahlabwärts eines Bearbeitungslasers 13 angeordnet. Eine automatische Fokusnachstelleinrichtung für variierende Bearbeitungsabstände a(t) ist vorgesehen.

Eine Sensorvorrichtung 16 mit einem Spektrometer 17 und Sensorlichtquellen 11 und 12 erzeugt Messstrahlen 18, die über den Laserscanner 14 und ein Objektiv 19 gemeinsam den Bearbeitungsbereich 20 des Werkstücks 6 unter Erfassung des Werkstückabstands a abtasten. Die Messstrahlen 18 der Sensorlichtquellen 11,12 sind linearpolarisiert und mit gekreuzten Polarisationsrichtungen in den Bearbeitungsstrahlengang 25 des Laserscanners 14 der Materialbearbeitungsvorrichtung 1 über ein optisches Koppelelement 21 kollimiert eingekoppelt. Die Lichtquellen 11 und 12 werden von zwei Superlumineszens-Dioden SLD mit linear polarisierter Abstrahlung gebildet. Diese Lichtquellen 11 und 12 sind über polarisationserhaltende Lichtleitfasern 22 und 23 mit einem Polarisationsstrahlenkoppler bzw. dem Koppelelement 21 verbunden, der durch einen polarisierenden Strahlteiler 24 die gekreuzten Polarisationsrichtungen zu einem Sensorlicht 29 in einer Lichtleitfaser 42 zusammenführt und die Messstrahlen 18 des Sensorastrahlengangs 26 bildet.

Die Materialbearbeitungsvorrichtung 1 weist ein rechnergestütztes Steuergerät 30 auf, das bei Scannerspiegeln 31 und 32 mit Beschichtungen, die eine unterschiedliche Reflektivität bei der Sensorwellenlänge und bei der Laserwellenlänge aufweisen, mit einer Tiefpasscharakteristik ausgestattet ist, die eine Sensorlichtwellenlänge, die größer als die Laserlichtwellenlänge ist aus dem reflektierten Signal herausfiltert und zur Abstandserfassung auswertet. Bei Scannerspiegeln 31 und 32 mit Beschichtungen, die eine unterschiedliche Reflektivität bei der Sensorwellenlänge und bei der Laserwellenlänge aufweisen, veranlasst das rechnergestützte Steuergerät 30 Kalibrierfahrten mit welchen jede Kombination der Orientierung der galvanisch beschichteten Scannerspiegel 31 und 32 im Vergleich zu einer Planfläche mit bekannter spektraler Reflektivität vermessen und im Rechner tabelliert gespeichert wird, und wobei die gespeicherte Tabelle bei der Auswertung des reflektierten Messsignals berücksichtigt wird.

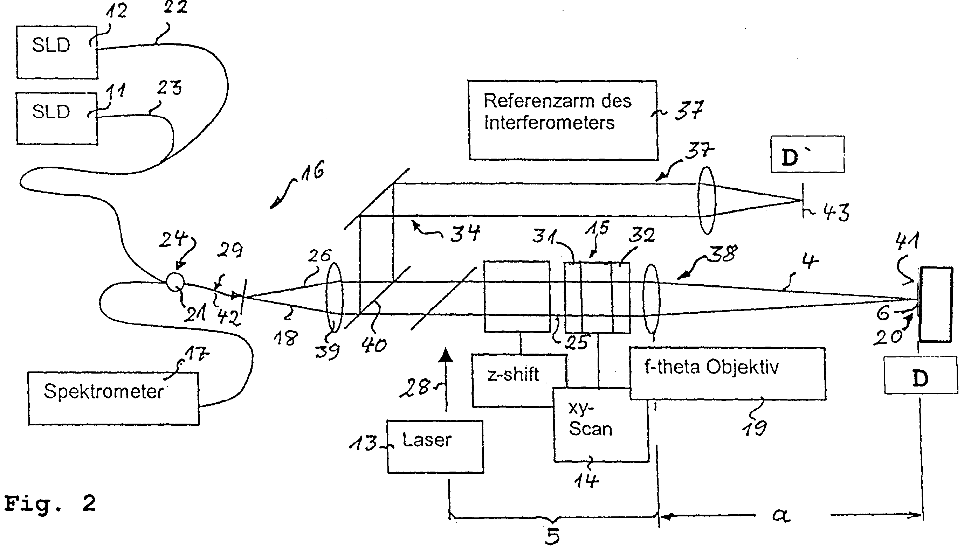

Die Laserscanneroptik besteht sowohl für die Materialbeabeitungsvorrichtung 1 gemäß Figur 1 als auch für die Materialbeabeitungsvorrichtung 2 gemäß Figur 2 vorzugsweise aus folgenden Komponenten:

1. einem Beam-Expander 39 bzw. einem optischen Strahlaufweiter mit Steuerung der Strahlkonvergenz für eine axiale Fokuslage;
2. einem Strahlteiler für ein in Figur 1 und Figur2 nicht gezeigtes Kamera-Modul zur Beobachtung des Bearbeitungsbereichs 20, das typischerweise für 650 nm ausgelegt ist;

3. einem Paar Galvanospiegel 31 und 32 zur Ablenkung des kollimierten Strahls in x- und y-Richtung, die orthogonal zur optischen z-Achse ausgerichtet sind;

4. einem F-theta-Linsensystem, das ein Spezialobjektiv 19 zum Gebrauch zusammen mit dem galvanisch beschichtetem Galvanospiegelpaar 31 und 32 ist und zur Fokussierung des kollimierten Bearbeitungsstrahls 4 in der Bearbeitungsebene 41, vorzugsweise telezentrisch ist, d.h. der fokussierte Bearbeitungsstrahl 4 trifft überall im Mess-/Bearbeitungsfeld senkrecht auf die Oberfläche auf.

Die Numerische Apertur NA des fokussierten Strahls 4 liegt typischerweise unter 0,1 mit einem Strahlkegel unter +/- 5°. Sobald die Oberflächenneigung über den Kegelwinkel hinausgeht, wird kein Licht zurück in die als "koaxial" bezeichnete Sensorvorrichtung 16, bei der die Beleuchtungsrichtung gleich der Detektionsrichtung ist, gespiegelt. Daher sind optische Sensoren in dem Spektrometer 17 eingesetzt, die auch noch Streulicht von schrägen Oberflächen auswerten können. Da die Oberfläche durch eine Laserbearbeitung meistens rauh wird, kann mit Streulicht gerechnet werden, so dass eine auswertbarer Anteil von dem Werkstück 6 in Detektorrichtung reflektiert wird.

Dabei haben sich konfokal-chromatische Sensoren als ungeeignet erwiesen, weil deren niedrige Numerische Apertur der Scanneroptik zu hoher Meßungenauigkeit führt. Einen weiteren Nachteil derartiger konfokaler-chromatischer Sensoren bildet die temperaturabhängige Kalibrierkurve, so dass eine Erwärmung der f-theta-Linsen durch den Leistungslaser die Kennlinien der konfokal-chromatischen Sensoren verändern kann.

In Figur 1 und Figur 2 werden unpolarisierte Lichtquellen 11 und 12, nämlich zwei Superlumineszens-Dioden (bzw. SLD) mit jedoch linear polarisierter Abstrahlung, die mit polarisationserhaltenden Lichtleitfasen 22 und 23 zu einem PBC (polarisation beam combiner) transportiert werden und im PBC mit gekreuzten Polarisationsrichtungen durch einen polarisierenden Strahlteiler 24 zusammengeführt werden, verwendet.

Wenn optische Komponenten wie Strahlteiler und Galvanospiegel eine je nach Polarisationsrichtung unterschiedliche spektrale Transmission aufweisen, wird auf diese Weise verhindert, dass durch Wackeln an den Lichtleitfasern 22, 23 oder 42 der Polarisationszustand und damit das Mischungsverhältnis zwischen den Polarisationsmoden und dadurch die spektrale Transmission verändert wird. Wenn in den beiden Polarisationsmoden jedoch unterschiedliche Wegunterschiede vorliegen (z.B. durch Spannungsdoppelbrechung oder durch Beschichtung), spaltet der Abstandspeak in zwei Teilpeaks auf. Um die beiden Teilpeaks so weit zu trennen, dass eine saubere Auswertung möglich ist, wird erfindungsgemäß ein doppelbrechendes Element, dessen Hauptrichtungen mit den Hauptrichtungen der polarisationsrelevanten Komponenten wie Strahlteiler und Galvanospiegel übereinstimmen, in den Strahlengang eingefügt.

In den mit den in den Figuren 1 und 2 gezeigten Ausführungsformen der Anmeldung werden spektraloptische FD (OCT) - Sensoren(Fourier Domain Optical Coherence Tomography - Sensoren) eingesetzt. Diese haben jedoch folgende Nachteile, die durch den Gegenstand der vorliegenden Erfindung überwunden werden.
Unkontrollierte Wegänderung zwischen Objekt- und Referenzarm durch Temperaturdrift oder Wackeln am Lichtleiter werden erfindungsgemäß durch den Einsatz von mindestens zwei Lichtquellen kompensiert;
Deutlich unterschiedliche Intensitäten aus Objekt- und Referenzarm und damit geringe spektrale Modulationstiefe bedingt z.B. durch schräge Oberfläche und / oder durch eine Defokussierung, werden durch minimale Messfleckdurchmesser erfindungsgemäß ausgeglichen;
Eine Defokussierung auf rauhen Oberflächen verschlechtert die Messqualität, da im Gegensatz zur spiegelnden Oberfläche, die nur ein einziges Teilstrahlenbündel zurück in die Lichtleitfasern bringt, bringt jeder beleuchtete Teil der rauhen Oberfläche Streulicht in Richtung der optischen Lichtleitfasern. Eine optische Lichtleitfaser sieht somit "ein Gemisch von Abständen". Dadurch wird auch der Fourierpeak ausgefranst aus. Dabei gilt, je kleiner der Spot auf einer rauhen Oberfläche, um so größer sind die Speckles (Spritzer) aus dem Streulicht. Deshalb wird in vorteilhafter Weise ein minimaler Messfleckdurchmesser mit einem Fokus auf der Oberfläche in dieser Erfindung erzeugt;
Eine schlechte Transmission des Sensorlichts durch den Strahlengang der Scanneroptik wird erfindungsgemäß vermieden, indem die Sensorwellenlänge von der Laserwellenlänge nicht stark abweicht. Die Beschichtung von Optikkomponenten der Scanneroptik ist nämlich auf die Laserwellenlänge abgestimmt. Dies betrifft vor allem Antireflex-, Spiegel- oder Strahlteilerschichten;
Eine veränderliche spektrale Transmission je nach Kippwinkel der Galvanospiegel aufgrund dielektrischer Spiegelschichten für einen Wellenlängenbereich, zumal blanke Metallspiegel für Laserlicht nicht geeignet sind, wird durch die erfindungsgemäßen Maßnahmen nahezu neutralisiert.

Eine Unabhängigkeit optischer Wegunterschiede von Temperatur und Vibrationen wird durch Bereitstellung einer umweltresistenten Referenzwelle ermöglicht. In Figur 1 wird dazu ein Vormodulierer 33 verwendet, der sowohl mit den Lichtquellen 11 und 12 als auch mit dem Sensorstrahlengang 26 durch eine Lichtleitfaser 42 verbunden ist und als Interferometer mit zwei Armen Punkte A und B ausgeführt ist. Das Faserende Punkt C zum Sensorstrahlengang 26 ist teilreflektierend ausgeführt. Die Teilwelle, die im längeren Referenzarm 35 (Punkt B) des Vormodulierers 33 und am Faserende Punkt C reflektiert wird, wird zur Interferenz gebracht mit der Teilwelle, die im kürzeren Objektarm 36 (Punkt A) und am Werkstück 6 (Punkt D) reflektiert wird. Die übrigen Interferenzen zwischen Teilwellen haben so große Wegunterschiede, dass deren spektrale Modulation von einem FD OCT -Sensors nicht mehr aufgelöst wird bzw. außerhalb des Messbereichs eines TD OCT -Sensors liegt.

Die optische Weglänge im Sensorstrahlengang 26 bis zur Werkstückoberfläche ist wellenlängenabhängig, weil die Glaskomponenten Dispersionen aufweisen. Im Referenzarm des Freistrahl-Vormodulierers 33 sind Glaskomponenten platziert, deren Gesamtdisperson die des Objektarms ist. Daher wird für den Freistrahl-Vormodulierer 33 eine Glasoptik mit gleicher Gesamtdispersion wie im Sensorstrahlengang von Punkt C nach Punkt D vorgesehen.

Figur 2 zeigt eine schematische Skizze einer Materialbeabeitungsvorrichtung 2 gemäß einer zweiten Ausführungsform der Erfindung. Komponenten mit gleichen Funktionen wie in Figur 1 werden mit gleichen Bezugszeichen gekennzeichnet und nicht extra erörtert. In Figur 2 wird anstelle des Freistrahl-Vormodulierer ein Interferometer 34 im kollimierten Sensorstrahl vor der Einkopplung in den Bearbeitungsstrahlengang 25 eingesetzt, wobei der Referenzarm 37 dispersionskompensierend wirkt und etwa die gleiche Länge wie der Objektarm 38 von dem Interferometer-Strahlteiler 40 bis zum Werkstück 6 aufweist.

Durch steuerbare Blenden und/oder Filter kann eine Helligkeitsanpassung der Lichtwelle im Referenzarm 37 erfolgen. Dazu werden vorzugsweise Blenden bzw. Filter eingesetzt, die eine konstante spektrale Transmission und einen konstanten optischen Weg haben und keine Dispersionseffekte oder Wellenfrontaberrationen aufweisen.

Ein bevorzugtes Ausführungsbeispiel ist ein Referenzspiegel 43, der eine räumlich variable Reflektivität aufweist und entlang der Spiegelebene verschoben werden kann, so dass der Spot des Sensorlichts, der fokussiert auf den Referenzspiegel 43 trifft, in seiner Intensität variiert wird. Einsetzbar sind auch Vorrichtungen, welche die spektrale Transmission oder Weglänge in vorhersagbarer Weise ändern, so dass dies in der Auswertungssoftware berücksichtigt werden kann.

Eine Kalibrierung der dreidimensionalen Sensorspot-Position kann mit einem planaren spiegelnden Kalibrierkörper, auf dem Rastermarken aufgebracht sind und der in der Höhe definiert verstellbar ist erfolgen. Das f-theta-Objektiv 19 weist eine Bildfeldwölbung und eine Verzeichnung auf. Außerdem hat die optische Weglänge des Sensorstrahls bis zur Werkstückebene 41 - aufgetragen über dem Messfeld in x-und y-Richtung - eine sattelförmige Gestalt. Daher wird erfindungsgemäß in einer Kalibrierfahrt der Zusammenhang zwischen den Scannerspiegelwinkeln und der Einstellung eines Nachfokussierers einerseits und der dreidimensionalen Position des Spots, sowie seines vom Sensor gemessenen optischen Wegs und seiner Defokussierung andererseits ermittelt.

Für eine phasenschiebende Messung wird ein Referenzspiegel, der in z-Richtung in mehreren definierten Schritten um ca. eine halbe Sensor-Mittenwellenlänge verschoben werden kann, eingesetzt. Dazu kann ein positionsgeregelter Piezosteller oder ein quer schwingender Stufenspiegel verwendet werden. Für eine phasenschiebende Messung wird eine Sequenz von mindestens drei Spektren mit z.B. äquidistanten Schritten j = 1, 2, 3 Gemessen. Damit ergibt sich:

$$I(j) = I(z_0 + j*\Delta z)$$
$$= E_R{}^2 + E_1{}^2 + 2\ E_R*E_1\ *$$
$$\{\cos(4\pi j*\Delta z/\lambda)*\cos[4\pi(z_0 - z_R)/\lambda + \Phi(\lambda)] - \sin(4\pi j*\Delta z/\lambda)$$
$$*$$
$$\sin[4\pi(z_0 - z_R)/\lambda + \Phi(\lambda)]\}$$

In der Messauswertung wird für jedes k-Pixel der Phasenwert berechnet, wobei die bekannten Terme $\cos(4\pi j*\Delta z/\lambda)$ und $\sin(4\pi j*\Delta z/\lambda)$ verwendet werden, um die Phase $[4\pi(z_0 - z_R)/\lambda + \Phi(\lambda)]$ zu bestimmen. Zweck der phasenschiebenden Messung ist eine höhere Robustheit des Messwerts, bedingt durch die höhere Anzahl von Messungen, die in die Auswertung eingehen.

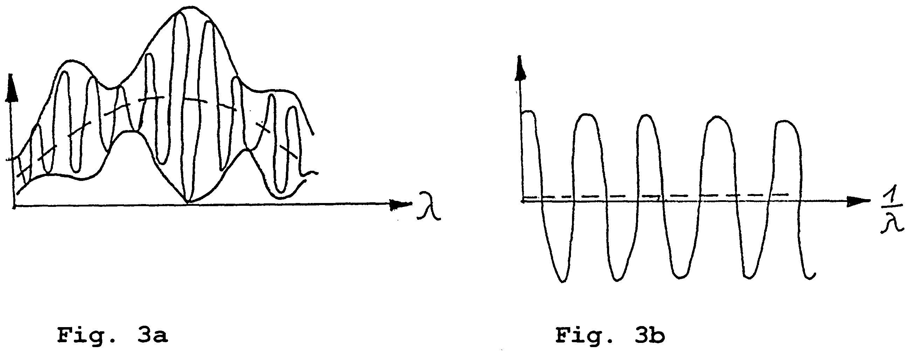

Figur 3 zeigt mit Figur 3a ein Rohspektum und mit Figur 3b ein nivelliertes Spektrum nach erfindungsgemäßer Bearbeitung. Das Rohspektrum hat die Gestalt des in Fig. 3a gezeigten Diagramms. Ohne Licht vom Objekt (nur Referenzlicht) wird die gestrichelte Linie gemessen. Im auf k = 1/$\lambda$ entzerrten Spektrum wird das Referenzlicht subtrahiert, das ergibt $I_0(k)$. Mit einem Tiefpaßfilter wird die spektrale Einhüllende $I_{0mean}(k)$ berechnet und dividiert, um in Figur 3b eine spektrale Modulation mit konstanter Amplitude zu erhalten. Schließlich wird eine FFT durchgeführt.

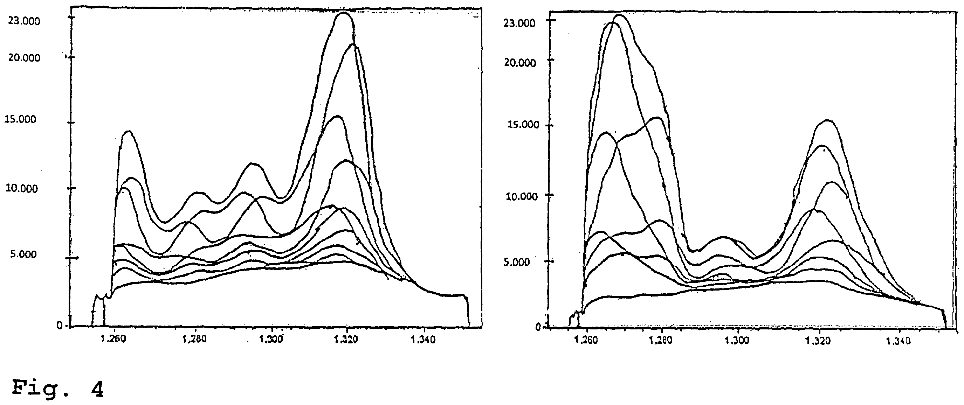

Fig. 4 zeigt zwei gemessene Reflektionsspektren eines Planspiegels eines Laserscanners im Spektralbereich 1260 bis 1360 nm und für zwei Winkelstellungen des Galvanospiegelpaars. In jedem Diagramm sind mehrere Spektren bei Nachfokussierung in äquidistanten Schritten gezeigt. Es ist erkennbar, dass beim Nachfokussieren der Intensitätsschwerpunkt von der kurzwelligeren Seite zu der langwelligeren Seite des Spektrums wandert. Darüber hinaus zeigt die spektrale Einhüllende eine wellige Form, die sich in den beiden Spiegelstellungen unterscheidet. Die Welligkeit entsteht durch eine dielektrische Spiegelschicht der Galvanospiegel.

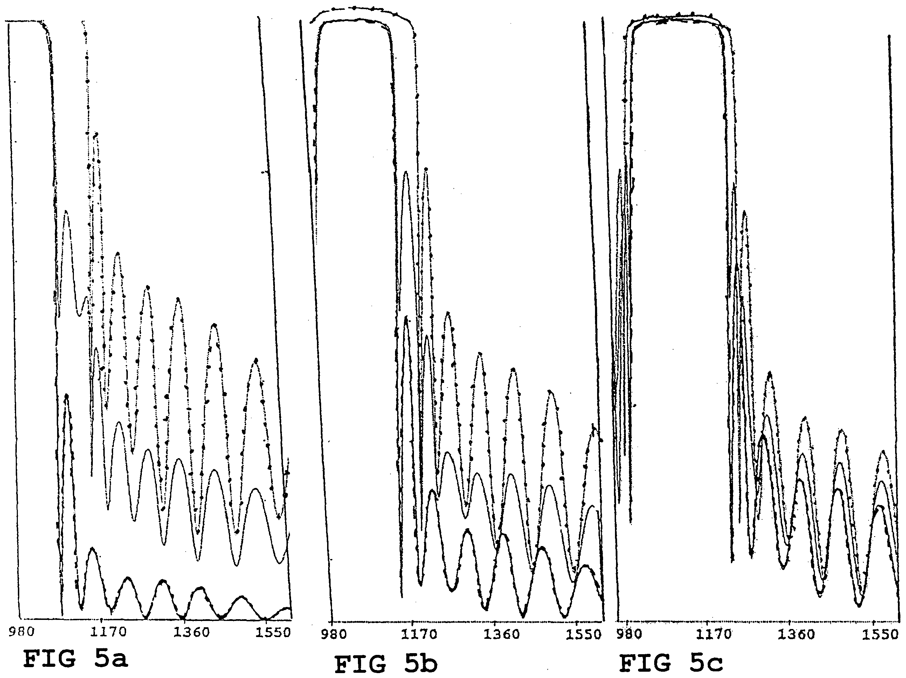

Fig. 5 zeigt eine Polarisations- und winkelabhängige Transmission der verwendeten Scannerspiegel 31 und 32. Fig. 5 zeigt das polarisationsabhängige Reflektionsspektrum eines einzelnen Galvanospiegels für drei Einfallswinkel, nämlich für einen Einfallswinkel 57,5° in Figur 5a, einen Einfallswinkel 45°in Figur 75b und einen Einfallswinkel 27,5° in Figur 5c. Punktierte Kurven stehen für eine s-Polarisation, gestrichelte Kurven stehen für eine p-Polarisation und durchgezogene Kurven stehen für eine "random polarisation".

Im Bereich der Laserwellenlänge 1050 nm ist ein breites Plateau mit hoher, polarisationsabhängiger Reflektivität, das mit zunehmendem Einfallswinkel in Richtung kurze Wellenlänge annimmt. Bei größeren Wellenlängen ist die Reflektivität schwach und spektral moduliert, teilweise bricht sie auf R<1% ein. Die Modulation verläuft in den beiden Polarisationsrichtungen nahezu gegenphasig. Weil im Aufbau immer ein Spiegelpaar wirkt, ist die Gesamtreflektivität noch komplizierter. Die Scannergeometrie gibt vor, dass eine Welle, die p-polarisiert auf den ersten Spiegel trifft, vorwiegend s-polarisiert auf den zweiten trifft, und umgekehrt.

Die spektrale Welligkeit der Spiegel-Reflektivität und die Schwebungserscheinungen im Reflektionsspektrum des Gesamtaufbaus zeigen, dass der Galvanospiegel mehrere sehr dünne "Eigenschichtdicken" hat, die vom Spektralinterferometer mitgemessen werden. Bei der Abstandsmessung wird somit nicht ein einzelner Fourierpeak, sondern die Überlappung mehrerer Teilpeaks erfasst. Abstand und Gewichtung der Teilpeaks hängen von den Spiegelwinkeln und vom Polarisationszustand ab. Mathematisch betrachtet hat die Objektwelle und die Referenzwelle die Form

$$E_{Objekt} = E_0 * \exp[i*4\pi z_0/\lambda]$$

$$E_{Referenz} = E_R * \exp[i*4\pi z_R/\lambda]$$

Dabei sind $z_0$ und $z_R$ die Laufstrecken in den beiden Interferometerarmen. Im ungestörten Fall sind $E_0$ und $E_R$ Konstanten. Die gemessene Intensität

$$I = \{E_{Objekt} + E_{Referenz}\} \{E^{\star}_{Objekt} + E^{\star}_{Referenz}\}$$

$$= I_{Objekt} + I_{Referenz} + I_{mod}$$

enthält den Interferenzterm

$$I_{mod} = (E_0*E^{\star}_R + E*_0*E_R) *\cos[4\pi(z_0 - z_R)/\lambda]$$

aus dem die Wegdifferenz der Arme bestimmt werden. Im ungestörten Fall wird der Vorfaktor zu 2 $E_0$ * $E_R$. Durch die Reflektivität der Galvanospiegel wird die Objektwelle komplex moduliert. Modellhaft werden zwei Eigenschichtdicken d1 und d2 angesetzt:

$$E_0 = E_1*\exp[i*4\pi\ d_1/\lambda] + E_2*\exp[i*4\pi d_2/\lambda]$$

und es ergibt sich:

$$I_{Objekt} = |E_1|^2 + |E_2|^2 + 2\ |E_1|*|\ E_2| * \cos[4\pi(d_1 - d_2)/\lambda]$$

$$I_{mod} = (E_1 * E^\star_R + E^\star_1 * E_R) * \cos[4\pi(z_0 + d_1 - z_R)/\lambda]$$
$$+ (E_2 * E^\star_R + E^\star_2 * E_R) * \cos[4\pi(z_0 + d_2 - z_R)/\lambda]$$
$$= (E_1 * E^\star_R + E^\star_1 * E_R) *$$
$$\{\cos[4\pi d_1/\lambda] * \cos[4\pi(z_0 - z_R)/\lambda] - \sin[4\pi d_1/\lambda] *$$
$$\sin[4\pi(z_0 - z_R)/\lambda]\}$$
$$+ (E_2 * E^\star_R + E^\star_2 * E_R) *$$
$$\{\cos[4\pi d_2/\lambda] * \cos[4\pi(z_0 - z_R)/\lambda] - \sin[4\pi d_2/\lambda] *$$
$$\sin[4\pi(z_0 - z_R)/\lambda]\}$$
$$= \{(E_1 * E^\star_R + E^\star_1 * E_R) \cos[4\pi d_1/\lambda] +$$
$$(E_2 * E^\star_R + E^\star_2 * E_R) \cos[4\pi d_2/\lambda] * \cos[4\pi(z_0 - z_R)/\lambda] -$$
$$\{(E_1 * E^\star_R + E^\star_1 * E_R) \sin[4\pi d_1/\lambda] +$$
$$(E_2 * E^\star_R + E^\star_2 * E_R) \sin[4\pi d_2/\lambda]\} * \sin[4\pi(z_0 - z_R)/\lambda]$$

Das Spektrum enthält demnach - wie angesetzt - zwei eng benachbarte Schichtdicken und bildet Schwebungserscheinungen.

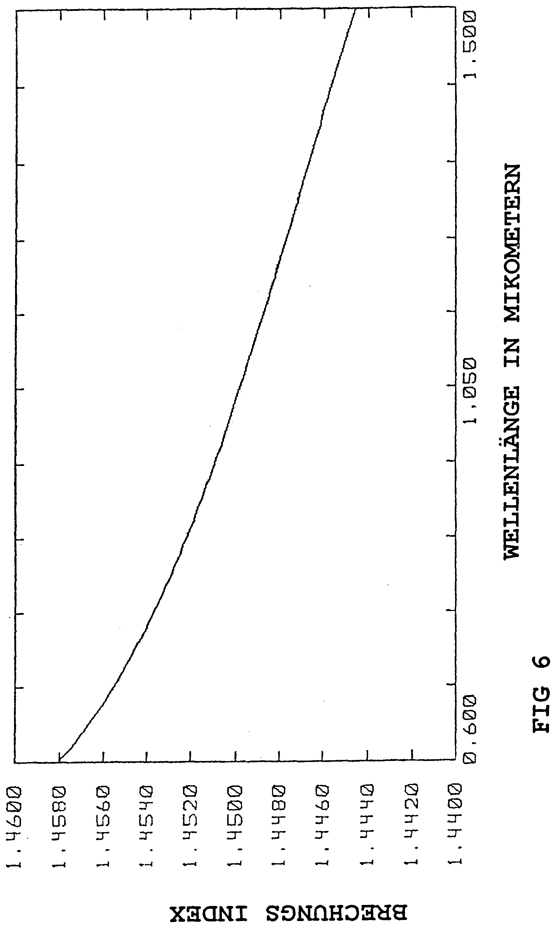

Figur 6 zeigt den Brechungsindex von Quarzglas in der Umgebung der Laserwellenlängen um 1050 nm. Dieser wellenlängenabhängige Brechungsindex von Quarzglas kann für eine erweiterte Schärfentiefe durch Nutzung der chromatischen Fokusverschiebung verwendet werden. Die f-theta-Objektive sind in der Regel nicht achromatisch, weil sie für einzelne Laserwellenlängen ausgelegt sind. Achromasie ist jedoch schwierig zu realisieren, weil Glassorten bevorzugt werden, die resistent sind gegen die hohen Spitzenintensitäten von Pulslasern wie z.B. Quarzglas.

Die Brennweite f ist daher bei Verwendung von Quarzglas wellenlängenabhängig. Gemäß der Formel für eine dünne Plankonvexlinse mit Krümmungsradius R gilt ungefähr $1/f = [n(\lambda) - 1]/R$. Daraus folgt

$$f = f_0/[1 + (n(\lambda) - n_0)/(n_0 - 1)]$$

wobei $f_0$ und $n_0$ die Brennweite bzw. der Brechungsindex bei der Laserwellenlänge sind.

Durch Taylorentwicklung ergibt sich:

$$f \approx f_0 - f_0 \Delta n/(n_0 - 1)$$

Für eine Quarzlinse mit f=100mm beträgt die spektrale Brechungsindexverschiebung 1,2e-5/nm und damit die Fokusverschiebung 2,7 $\mu$m/nm. Bei einer Sensorbandbreite von 100 nm beträgt die Fokusverschiebung im Spektrum bereits 270 $\mu$m. Dem steht der Schärfentiefebereich gegenüber. Er ist gegeben durch die Rayleigh-Länge, auf der sich die Strahlquerschnittsfläche eines Gaußstrahls, ausgehend vom Strahlfokus, verdoppelt (bzw. die Intensität halbiert)

$$z_R = \pi w_0^2/\lambda$$

Dabei ist $w_0$ der Strahlradius im Fokus, bei dem die Intensität auf $e^{-2} = 0,135$ der Mittenintensität abgefallen ist. Bezogen auf die Numerische Apertur NA ist

$$w_0 = \lambda/[\pi \tan(\arcsin NA)]$$

Mit der paraxialen Näherung $NA = \lambda/\pi w_0$ folgt

$$z_R = \lambda / (\pi NA^2)$$

Für eine NA=0,05 und 1050 nm Wellenlänge ist somit $w_0$ = 13 μm und $z_R$ = 133 μm.

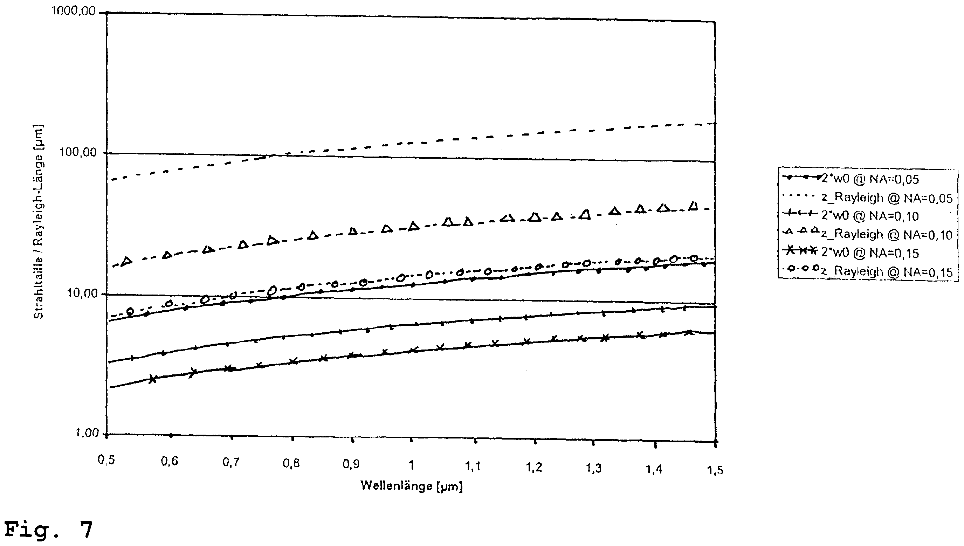

Figur 7 zeigt dazu ein Diagramm für Gaußstrahlparameter in Bezug auf den Taillendurchmesser und die Rayleighlänge. Die weiter oben berechnete Fokusverschiebung für 100mm Brennweite und 100 nm Bandbreite lag bei 270 μm und ist doppelt so groß. Daraus folgt, dass bei NA=0,05 die Randwellenlängen des Sensorspektrums durch Defokussierung um den Faktor 0,5 abgeschwächt sind.

Die Messungen von Fig. 4 wurden mit ca. NA=0,10 durchgeführt. Hier ist die Abschwächung der defokussierten Wellenlängen noch extremer, weil $z_R$ = 33 μm ist. Der Spotdurchmesser ist mit $w_0$ = 6,6 μm nur noch halb so groß. Dies ist günstig für die Qualität der Abstandsmessung im Fokus. Nachteilig ist jedoch die st ärkere Abschwächung bei Defokussierung.

Die chromatische Fokusverschiebung des f-theta-Objektivs wird erfindungsgemäß genutzt, um gleichzeitig eine n kleinen Spot bei hoher NA und einen großen Fangbereich für eine fokussierte Messung zu haben. Dieser ist im Beispiel 270 μm für 100 nm Sensorbandbreite. Wenn sich das Werkstück im Fangbereich befindet, wird eine Wellenlänge im Sensorband maximal scharf. Nur Wellenlängen um das Fokusmaximum herum mit der Fokusverschiebung < +/-$z_R$ tragen merklich zum Signal bei. Daher werden erfindungsgemäß nachfolgende Maßnahmen durchgeführt:

1. Bei der Entzerrung und Normierung des Spektrums wird eine Fensterfunktion gewählt, die deutlich schmaler als die Sensorbandbreite ist und deren Maximum im Intensitätsmaximum des Rohspektrums liegt.
2. In einer "passiven" Variante wird überhaupt nicht gefenstert, weil dies schon physikalisch von der wellenlängenabhängigen Defokussierung erledigt wird.
3. Um das Werkstück grob zu lokalisieren, wird ein Sensor mit großem Fangbereich, also ein extrem breitbandiger Sensor eingesetzt. Das Messverfahren kann hier spektralinterferometrisch oder chromatisch-konfokal sein. Für die Feinmessung ist eine Reihe von schmalbandigen spektral-interferometrischen Sensoren zuständig. Ihre Wellenlängenbereiche überlappen und decken insgesamt das Spektrum des Grob-Sensors ab. Jeweils einer dieser Sensoren wird aktiviert.
4. Ein derartiges Multisensor-Konzept wird mit einem einzigen Spektrometer realisiert. Dazu wird ein Spektrometer mit Echelle-Gitter eingesetzt, das je nach Beugungsordnung verschiedene Spektralbereiche detektiert. Dabei werden mehrere SLD-Lichtquellen, wobei jeder SLD eine bestimmte Beugungsordnung zugeordnet ist, verwendet. Zur Verbindung der SLDs mit dem Messkopf und mit dem Spektrometer sind Faserkoppler, Faserzirkulatoren und/oder WDM-Koppler, ein Faseranalogon zum dichroischen Strahlteiler vorgesehen, oder alternativ, ein Freistrahlkoppler. Die Faserkanäle in Richtung Interferometer werden per Faserumschalter auf eine Endfaser eingekoppelt (damit man immer auf dem selben Punkt misst). Die Fasern in Richtung Spektrometer werden zu einem Array zusammengefasst, das senkrecht zur Richtung der spektralen Auffächerung steht. Die Pixel des Zeilendetektors sind in Arrayrichtung lang genug (0,5 oder 1mm) um das Licht aus jeder Faser des Arrays einzufangen.

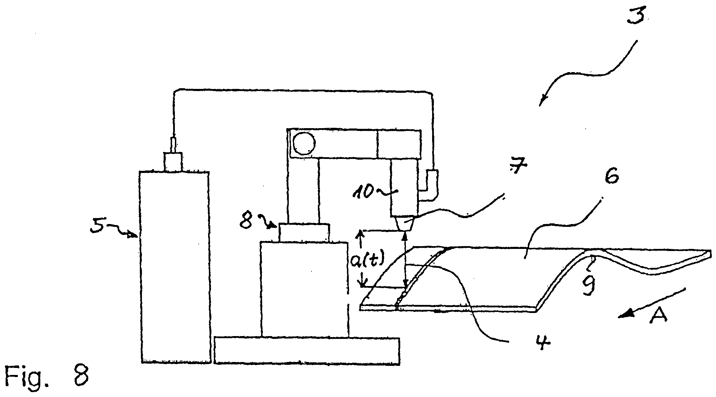

Figur 8 zeigt eine teilweise perspektivische Prinzipskizze einer Materialbearbeitungsvorrichtung gemäß dem Stand dem Technik, die einleitend bereits erörtert wurde, weshalb sich eine erneute Betrachtung an dieser Stelle erübrigt.

Die Materialbearbeitungsvorrichtung 1 weist ein rechnergestütztes Steuergerät 30 auf, das bei Scannerspiegeln 31 und 32 mit Beschichtungen, die eine unterschiedliche Reflektivität bei der Sensorwellenlänge und bei der Laserwellenlänge aufweisen, mit einer Tiefpasscharakteristik ausgestattet ist, die eine Sensorlichtwellenlänge, die größer als die Laserlichtwellenlänge ist aus dem reflektierten Signal herausfiltert und zur Abstandserfassung auswertet. Bei Scannerspiegeln 31 und 32 mit Beschichtungen, die eine unterschiedliche Reflektivität bei der Sensorwellenlänge und bei der Laserwellenlänge aufweisen, veranlasst das rechnergestützte Steuergerät 30 Kalibrierfahrten mit welchen jede Kombination der Orientierung der galvanisch beschichteten Scannerspiegel 31 und 32 im Vergleich zu einer Planfläche mit bekannter spektraler Reflektivität vermessen und im Rechner tabelliert gespeichert wird, und wobei die gespeicherte Tabelle bei der Auswertung des reflektierten Messsignals berücksichtigt wird.

Bezugszeichenliste

1    Materialbearbeitungsvorrichtung (1. Ausführungsform)
2    Materialbearbeitungsvorrichtung (2. Ausführungsform)
3    Materialbearbeitungsvorrichtung (Stand der Technik)
4    Bearbeitungsstrahl

| 5 | Strahlerzeuger |
|---|---|
| 6 | Werkstück |
| 7 | Bearbeitungskopf |
| 8 | Industrieroboter |
| 9 | Wölbung |
| 10 | Tomograph |
| 11 | erste Lichtquelle |
| 12 | zweite Lichtquelle |
| 13 | Bearbeitungslaser |
| 14 | Laserscanner |
| 15 | Ablenkeinrichtung |
| 16 | Sensorvorrichtung |
| 17 | Spektrometer |
| 18 | Messstrahl |
| 19 | Objektiv |
| 20 | Bearbeitungsbereich |
| 21 | optisches Koppelelement |
| 22 | Lichtleitfaser |
| 23 | Lichtleitfaser |
| 24 | Strahlteiler |
| 25 | Bearbeitungsstrahlengang |
| 26 | Sensorstrahlengang |
| 29 | Sensorlicht |
| 30 | Steuergerät |
| 31 | Scannerspiegel |
| 32 | Scannerspiegel |
| 33 | Freistrahl Vormodulierer |
| 34 | Interferometer |
| 35 | Referenzarm des Freistrahl Vormodulierers |
| 36 | Objektarm des Freistrahl Vormodulierers |
| 37 | Referenzarm des Interferometers |
| 38 | Objektarm des Interferometers |
| 39 | Beamexpander bzw. Strahlaufweister |
| 40 | Interferometer-Srahlteiler |
| 41 | Bearbeitungsebene |
| 42 | Lichtleitfaser |
| 43 | Referenzspiegel |
| | |
| A | Pfeilrichtung |
| a | Abstand |

**Patentansprüche**

1. Materialbearbeitungsvorrichtung mit Bearbeitungsstrahlen (4) eines Strahlerzeugers (5) und mit in-situ Messen des Bearbeitungsabstands (a) zwischen dem Strahlerzeuger (5) und dem Werkstück (6), wobei die Materialbearbeitungsvorrichtung (1) aufweist:

    - einen Bearbeitungslaser (13),
    - eine Sensorvorrichtung (16) mit einem Spektrometer (17) und mindestens einer Sensorlichtquelle
**gekennzeichnet durch**:

    einen Laserscanner (14) für den Bearbeitungslaser (13) mit zweidimensionaler Ablenkeinrichtung (15) mit Scannerspiegeln (31, 32) und einer variablen Fokusnachstelleinrichtung bei variierenden Bearbeitungsabständen (a(t));

    - die Sensorvorrichtung (16) umfassend mindestens zwei Sensorlichtquellen (11, 12); wobei Messstrahlen (18) über den Laserscanner (14) und ein Objektiv (19) gemeinsam den Bearbeitungsbereich (20) des Werkstücks

(6) unter Erfassung des Werkstückabstands (a) abtasten und die Messstrahlen (18) mindestens zwei der Sensorlichtquellen (11,12) linearpolarisiert sind und mit gekreuzten Polarisationsrichtungen in den Bearbeitungsstrahlengang (25) des Laserscanners (14) der Materialbearbeitungsvorrichtung (1) über ein optisches Koppelelement (21) kollimiert eingekoppelt sind.

2. Materialbearbeitungsvorrichtung nach Anspruch 1, wobei die Lichtquellen (11, 12) Superlumineszens-Dioden mit linear polarisierter Abstrahlung aufweisen, und wobei die Lichtquellen (11, 12) über polarisationserhaltende Lichtleitfasern mit einem Polarisationsstrahlenkoppler (21) verbunden sind, der durch einen polarisierenden Strahlteiler (24) die gekreuzten Polarisationsrichtungen zusammenführt.

3. Materialbearbeitungsvorrichtung nach Anspruch 1 oder Anspruch 2, wobei zum kollimierten Einkoppeln der Messstrahlen (18) in den Bearbeitungsstrahlengang (25), der Sensorstrahlengang (26) einen schmalbandigen dichroischen Strahlteiler aufweist, oder zum kollimierten Einkoppeln der Messstrahlen (18) in den Bearbeitungsstrahlengang(25), der Sensorstrahlengang (26) ein schmalbandiges Notch-Filter aufweist, oder zum kollimierten Einkoppeln der Messstrahlen (18) in den Bearbeitungsstrahlengang (25) ein in den Strahlengang einschwenkbarer Umlenkspiegel vorgesehen ist.

4. Materialbearbeitungsvorrichtung nach Anspruch 1 oder Anspruch 2, wobei zum kollimierten Einkoppeln der Messstrahlen (18) in den Bearbeitungsstrahlengang (25), ein rotierendes Filterrad vorgesehen ist, das abwechselnd Laserlicht oder Sensorlicht in den Laserscanner (14) einkoppelt und synchron zur Pulsfrequenz des Bearbeitungslasers (13) rotiert, so dass in den Pulspausen der Laserscanner (14) für den Messstrahl (18) vorgesehen ist.

5. Materialbearbeitungsvorrichtung nach einem der vorhergehenden Ansprüche, wobei die Sensorlichtquellen (11,12) eine Sensorwellenlänge aufweisen, welche die Wellenlänge eines Kammerafensters der Scannerspiegel (31, 32) ausweist.

6. Materialbearbeitungsvorrichtung nach einem der vorhergehenden Ansprüche, wobei der Laserscanner (14) Scannerspiegel (31, 32) mit Beschichtungen aufweist, die eine
gleiche Reflektivität bei der Sensorwellenlänge und bei der Laserwellenlänge aufweisen.

7. Materialbearbeitungsvorrichtung nach einem der vorhergehenden Ansprüche, wobei die Materialbearbeitungsvorrichtung (1) ein rechnergestütztes Steuergerät (30) aufweist, das bei Scannerspiegeln (31, 32) mit Beschichtungen, die eine unterschiedliche Reflektivität bei der Sensorwellenlänge und bei der Laserwellenlänge aufweisen, mit einer Tiefpasscharakteristik ausgestattet ist, die eine Sensorlichtwellenlänge, die größer als die Laserlichtwellenlänge ist aus dem reflektierten Signal herausfiltert und zur Abstandserfassung auswertet.

8. Materialbearbeitungsvorrichtung nach einem der Ansprüche 1 bis 6, wobei die Materialbearbeitungsvorrichtung (1) ein rechnergestütztes Steuergerät (30) ausweist, das bei Scannerspiegeln (31, 32) mit Beschichtungen, die eine unterschiedliche Reflektivität bei der Sensorwellenlänge und bei der Laserwellenlänge aufweisen, Kalibrierfahrten veranlasst, mit welchen jede Kombination der Orientierung der galvanisch beschichteten Scannerspiegel (31, 32) im Vergleich zu einer Planfläche mit bekannter spektraler Reflektivität vermessen und im Rechner tabelliert gespeichert werden, und wobei die gespeicherte Tabelle bei der Auswertung des reflektierten Messsignals berücksichtigt wird.

9. Materialbearbeitungsvorrichtung nach einem der vorhergehenden Ansprüche, wobei die Sensorvorrichtung einen Freistrahl-Vormodulierer (33) aufweist, der sowohl mit den Sensorlichtquellen (11, 12) als auch mit dem Sensorstrahlengang (26) durch eine Lichtleitfaser (22, 23) verbunden ist.

10. Materialbearbeitungsvorrichtung nach Anspruch 9, wobei der Freistrahl-Vormodulierer (33) als Interferometer (34) mit zwei Armen (35, 36) ausgeführt ist.

11. Materialbearbeitungsvorrichtung nach Anspruch 10, wobei das Faserende des Freistrahl-Vormodulierers (33) zum Sensorstrahlengang (26) hin teilreflektierend ausgeführt ist.

12. Materialbearbeitungsvorrichtung nach einem der Ansprüche 9 bis 11, wobei eine erste Teilwelle mit einer zweiten Teilwelle zur Interferenz gebracht wird, wobei die erste Teilwelle in dem längeren Referenzarm (35) des Freistrahl-Vormodulierers (33) und am Faserende und die zweite Teilwelle im kürzeren Objektarm (36) und an dem Werkstück (6) reflektiert ist, wobei andere spektrale Modulationen außerhalb des Messbereichs einer Auswerteeinheit liegen.

**13.** Materialbearbeitungsvorrichtung nach einem der Ansprüche 9 bis 12, wobei in dem Freistrahl- Vormodulierer (33) eine Glasoptik mit einer gleichen Dispersion wie die Gesamtdispersion im Sensorstrahlengang (26) angeordnet ist.

**14.** Materialbearbeitungsvorrichtung nach einem der Ansprüche 1 bis 13, wobei ein Interferometer (34) in dem kollimierten Messstrahl (18) vor einer Einkopplung des Bearbeitungslaserstrahls (4) angeordnet ist und der Referenzarm (37) des Interferometers (34) dispersionskompensierend wirkt und der Referenzarm (37) die gleiche optische Länge wie der Objektarm (38) zwischen einem Interferometerstrahlteiler (40) und dem Werkstück (6) aufweist.

**15.** Materialbearbeitungsvorrichtung nach einem der vorhergehenden Ansprüche, wobei außerhalb des Bearbeitungsbereichs (20) ein zweiter Sensorkopf angeordnet ist, der einen Referenzabstand zum Werkstück (6) erfasst und eine absolute Änderung einer Bearbeitungstiefe bei Laserablation oder einer Bearbeitunghöhe beim Materialauftrag ermittelt.

**Claims**

**1.** Material processing device with processing beams (4) of a beam generator (5) and with in-situ measurement of the processing distance (a) between the beam generator (5) and the workpiece (6), the material processing device (1) comprising:

- a processing laser (13),
- a sensor device (16) with a spectrometer (17) and at least one sensor light source
**characterised by**:

a laser scanner (14) for the processing laser (13) with a two-dimensional deflection device (15) with scanner mirrors (31, 32) and a variable focus adjustment device at varying processing distances (a(t));

- the sensor device (16) comprising at least two sensor light sources (11, 12); wherein measuring beams (18) together scan the processing region (20) of the workpiece (6) by means of the laser scanner (14) and an objective lens (19) to record the workpiece distance (a), and the measuring beams (18) of at least two of the sensor light sources (11, 12) are linearly polarised and coupled in a collimated state with crossed polarisation directions into the processing beam path (25) of the laser scanner (14) of the material processing device (1) by an optical coupling element (21).

**2.** Material processing device according to claim 1, the light sources (11, 12) comprising superluminescent diodes with linearly polarised emission and the light sources (11, 12) being connected via polarisationmaintaining optical fibres to a polarisation beam coupler (24) that combines the crossed polarisation directions by means of a polarising beam splitter.

**3.** Material processing device according to claim 1 or claim 2, the sensor beam path (26) comprising a narrow-band dichroic beam splitter to couple the measurement beam (18) into the processing beam path (25) in a collimated state or the sensor beam path (26) having a narrow-band notch filter to couple the measurement beam (18) into the processing beam path (25) in a collimated state or a deflecting mirror that can be pivoted into the beam path being provided to couple the measurement beam (18) into the processing beam path (25) in a collimated state.

**4.** Material processing device according to claim 1 or 2, there being provided, in order to couple the measurement beam (18) into the processing beam path (25) in a collimated state, a rotating filter wheel that alternately couples laser light or sensor light into the laser scanner (14) and rotates synchronously with the pulse frequency of the processing laser (13) such that the laser scanner (14) is available for the measurement beam (18) during pulse pauses.

**5.** Material processing device according to one of the preceding claims, the sensor light sources (11, 12) having a sensor wave length that has the wavelength of a camera window of the scanner mirrors (31, 32).

**6.** Material processing device according to one of the preceding claims, the laser scanner (14) comprising scanner mirrors (31, 32) with coatings that have identical reflectivity at the sensor wavelength and the laser wavelength.

**7.** Material processing device according to one of the previous claims, the material processing device (1) comprising a computerised control device (30) that, if the scanner mirrors (31, 32) have coatings with different reflectivities at the sensor wavelength and the laser wavelength, is provided with a deep-pass characteristic that filters a sensor light wavelength greater than the optical fibre wave length out of the reflected signal and evaluates it to record the distance.

**8.** Material processing device according to one of claims 1 to 6, the material processing device (1) comprising a computerised control device (30) that, if the scanner mirrors (31, 32) have coatings with different reflectivities at the sensor wavelength and the laser wavelength, trigger calibration runs by which each combination of orientations of the galvanically coated scanner mirrors (31, 32) are measured in relation to a plane surface of known spectral reflectivity and stored in table form in the computer, the stored table being used for the evaluation of the reflected measurement signal.

**9.** Material processing device according to one of the preceding claims, the sensor device comprising a free-beam pre-modulator (33) that is connected both to the sensor light sources (11, 12) and to the sensor beam path (26) by an optical fibre (22, 23).

**10.** Material processing device according to claim 9, the free-beam pre-modulator (33) being configured as an interferometer (34) with two arms (35, 36).

**11.** Material processing device according to claim 10, the fibre end of the free-beam pre-modulator (33) being configured such that it is partially reflective towards the sensor beam path (26).

**12.** Material processing device according to one of claims 9 to 11, a first sub-wave being made to interfere with a second sub-wave, the first sub-wave being reflected in the longer reference arm (35) of the free-beam pre-modulator (33) and at the fibre end, and the second sub-wave being reflected in the shorter object arm (36) and at the workpiece (6), other spectral modulations lying outside the measurement range of an evaluation unit.

**13.** Material processing device according to one of claims 9 to 12, a glass optical assembly with dispersion identical to the total dispersion in the sensor beam path (26) being arranged in the free-beam pre-modulator (33).

**14.** Material processing device according to one of claims 1 to 13, an interferometer (34) being arranged in the collimated measuring beam (18) before the processing laser beam (4) is coupled in and the reference arm (37) of the interferometer (34) having a dispersioncompensating effect and the reference arm (37) having the same optical length as the object arm (38) between an interferometer beam splitter (40) and the workpiece (6).

**15.** Material processing device according to one of the preceding claims, a second sensor head that records a reference distance to the workpiece (6) and determines an absolute change in processing depth during laser ablation or in processing height during material deposition being arranged outside the processing region (20).

**Revendications**

**1.** Dispositif d'usinage de matériau comportant des faisceaux d'usinage (4) d'un générateur de faisceaux (5) et destiné à mesurer in-situ la distance d'usinage (a) entre le générateur de faisceaux (5) et la pièce à usiner (6), le dispositif d'usinage de matériau (1) présentant :

- un laser d'usinage (13),
- un dispositif de détection (16) comprenant un spectromètre (17) et au moins une source de lumière de détection, **caractérisé par** : un scanner laser (14) pour le laser d'usinage (13) ayant une unité de déviation (15) dotée de miroirs de scanner (31, 32) et un dispositif de réglage de focalisation pour des distances d'usinage variables (a(t)) ;
- le dispositif de détection (16) comprenant au moins deux sources de lumière de détection (11, 12), les faisceaux de mesure (18) balayant au moyen du scanner laser (14) et d'un objectif la zone d'usinage (20) de la pièce à usiner (6) par détection de la distance par rapport à la pièce à usiner (a) et les faisceaux de mesure (18) étant au moins deux des sources de lumière de détection (11, 12) polarisées linéairement et étant couplées de manière collimatée au moyen d'un élément de couplage optique (21) aux directions de polarisation croisées dans le trajet de faisceau d'usinage (25) du scanner laser (14) du dispositif d'usinage de matériau (1).

**2.** Dispositif d'usinage de matériau selon la revendication 1, **caractérisé en ce que** les sources de lumière (11, 12) présentent des diodes superluminescentes à rayonnement polarisé linéaire, et les sources de lumière (11, 12) étant reliées au moyen de fibres conductrices de lumière à maintien de polarisation au coupleur de faisceau de polarisation (21) qui regroupe les directions de polarisation croisées au moyen d'un séparateur de faisceau (24) polarisant.

**3.** Dispositif d'usinage de matériau selon la revendication 1 ou la revendication 2, afin de coupler de manière collimatée les faisceaux de mesure (18) dans le trajet de faisceau d'usinage (25), le trajet de faisceau de détection (26) présente un séparateur de faisceau dichroïque à bande étroite, ou pour le couplage collimaté des faisceaux de mesure (18) dans le trajet de faisceau d'usinage (25), le trajet de faisceau de détection (26) présente un filtre coupe-bande à bande étroite ou pour le couplage collimaté des faisceaux de mesure (18) dans le trajet de faisceau d'usinage (25) il est prévu un miroir pivotant dans le trajet de faisceau un miroir de renvoi pivotant.

**4.** Dispositif d'usinage de matériau selon la revendication1 ou la revendication 2, pour le couplage collimaté des faisceaux de mesure (18) dans le trajet de faisceau d'usinage (25), il est prévu une roue porte-filtres rotative qui couple tour à tour la lumière laser ou la lumière de détection dans le scanner laser (14) et tourne de manière synchrone à la fréquence d'impulsion du laser d'usinage (13) de sorte que dans les pauses d'impulsion il soit prévu le scanner laser (14) pour le faisceau de mesure (18).

**5.** Dispositif d'usinage de matériau selon l'une quelconque des revendications précédentes, les sources de lumière de détection (11, 12) présentant une longueur d'onde de détection qui présente la longueur d'onde d'une fenêtre de caméra du miroir (31, 32) de scanner.

**6.** Dispositif d'usinage de matériau selon l'une quelconque des revendications précédentes, le scanner laser (14) présentant le miroir de scanner (31, 32) dotées de revêtements qui présentent la même réflexivité pour la longueur d'onde de détection et la longueur d'onde laser.

**7.** Dispositif d'usinage de matériau selon l'une quelconque des revendications précédentes, le dispositif d'usinage de matériau (1) présentant un dispositif de commande (30) assisté par ordinateur qui pour les miroirs laser (31, 32) dotés de revêtements qui présentent une réflexivité différente pour la longueur d'onde de détection et pour la longueur d'onde laser, qui est équipé d'une caractéristique de passe-bas, qui évalue la longueur d'onde de lumière de détection qui est supérieure à la longueur d'onde de lumière laser, qui extrait par filtrage du signal réfléchi et l'évalue pour la détection de distance.

**8.** Dispositif d'usinage de matériau selon l'une quelconque des revendications 1 à 6, le dispositif d'usinage de matériau (1) présente un dispositif de commande (30) assisté par ordinateur, qui provoque des trajets d'étalonnage pour les miroirs (31, 32) de scanner dotés de revêtements qui présentent une réflexivité différentes pour la longueur d'onde de détection et pour la longueur d'onde laser, lesdits trajets d'étalonnage permettent de mesurer chaque combinaison de l'orientation des miroirs (31, 32) de scanner galvanisés en comparaison avec une face ayant une réflexivité spectrale connue et chaque combinaison étant mémorisée dans des tableaux dans un ordinateur, et le tableau mémorisé étant pris en compte lors de l'évaluation du signal de mesure réfléchi.

**9.** Dispositif d'usinage de matériau selon l'une quelconque des revendications précédentes, le dispositif de détection présentant un pré-moduleur (33) de faisceau libre qui est relié tant aux sources de lumière de détection (11, 12) qu'au trajet de faisceau de détection (26) au moyen d'une fibre conductrice de lumière (22, 23).

**10.** Dispositif d'usinage de matériau selon la revendication 9, le pré-moduleur (33) de faisceau libre est conçu comme un interféromètre (34) doté de deux bras (35, 36).

**11.** Dispositif d'usinage de matériau selon la revendication 10, l'extrémité de fibre du pré-moduleur (33) de faisceau libre est mis en oeuvre vers le trajet de lumière de détection (26) de manière partiellement réfléchissante.

**12.** Dispositif d'usinage de matériau selon l'une quelconque des revendications 9 à 11, une première onde partielle est amenée en interférence avec une seconde onde partielle, la première onde partielle étant réfléchie dans le bras de référence (35) le plus long du pré-modulateur (33) de faisceau libre et sur l'extrémité de fibre et la seconde onde partielle dans le bras d'objet (36) le plus court et sur la pièce à usiner, d'autres modulations spectrales se trouvant en dehors de la zone de mesure d'une unité d'évaluation.

**13.** Dispositif d'usinage de matériau selon l'une quelconque des revendications 9 à 12, dans le pré-moduleur (33) de faisceau libre est disposé un optique en verre doté d'une dispersion identique à la dispersion totale dans le trajet de faisceau de détection (26).

14. Dispositif d'usinage de matériau selon l'une quelconque des revendications 1 à 13, un interféromètre (34) étant disposé dans le faisceau de mesure collimaté (18) en amont d'un couplage du faisceau laser d'usinage (4) et le bras de référence (37) de l'interféromètre (34) agissant de manière à compenser la dispersion et le bras de référence (37) présentant la même longueur optique que le bras d'objet (38) entre un séparateur de faisceau d'interféromètre (40) et la pièce à usiner (6).

15. Dispositif d'usinage de matériau selon l'une quelconque des revendications précédentes, en dehors de la zone d'usinage (20) est disposée une seconde tête de capteur qui détecte une distance de référence par rapport à la pièce à usiner et détermine une modification absolue d'une profondeur d'usinage lors de l'ablation par laser ou une hauteur d'usinage lors de l'application de matériau.

Fig. 1

SLD 12
SLD 11
22
23
24
21
29
42

A 16

Freistrahl-vormodulierer 33

26 35

B

18

Spektrometer 17

C

30

28

27

39

18

z-shift

Laser 13

31 15 32

25

xy-Scan 14

36 4

f-theta Objektiv 19

20 6 41

D

α

5

EP 2 569 123 B1

Fig. 2

SLD *12* *22*

SLD *11* *23*

Spektrometer *17*

*24* *29*
*21* *42*
*18* *39* *40*

*16*

*26*

Referenzarm des Interferometers *37*

*34*

D`

*37*

*43*

*31* *15* *32*

*38* *4*

*41*

*6* *20*

z-shift

xy-Scan

f-theta Objektiv *19*

*25*

*28*

Laser *13*

*14*

*5*

a

D

EP 2 569 123 B1

Fig. 3a

Fig. 3b

EP 2 569 123 B1

Fig. 4

FIG 5a

FIG 5b

FIG 5c

FIG 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1977850 A1